# EUROPEAN PATENT SPECIFICATION

(11) **EP 4 542 277 B1**
(45) Date of publication and mention of the grant of the patent: **17.12.2025**
(21) Application number: 24188850.2
(22) Date of filing: 16.07.2024
(51) Int. Cl.: G02B 7/00, G02B 7/02, G03B 17/12, G03B 11/00

(54) **LENS ASSEMBLY**
LINSENANORDNUNG
ENSEMBLE LENTILLE

(30) Priority: 19.10.2023 KR 20230140424
(43) Date of publication of application: 23.04.2025
(73) Proprietor: Samsung Electro-Mechanics Co., Ltd., Gyeonggi-do (KR)
(72) Inventor: Eun Chong, Lee, Suwon-si, Gyeonggi-do (KR)
(74) Representative: Grünecker Patent- und Rechtsanwälte PartG mbB

(56) References cited:
- KR-A- 20150 058 861
- KR-A- 20220 035 360
- KR-B1- 101 862 391

## Description

### CROSS-REFERENCE TO RELATED APPLICATIONS

This application claims benefit of priority to Korean Patent Application No. 10-2023-0140424 filed on October 19, 2023, in the Korean Intellectual Property Office.

### BACKGROUND

### 1. Field

The present disclosure relates to a lens assembly applied to a camera module.

### 2. Description of the Background

A lens assembly may include a plurality of lenses, and a filter may be disposed at the rear of the plurality of lenses. In this case, the filter may be assembled with the lens assembly in such a manner that it is attached to the rear of the lens barrel.

An adhesive may be used to attach the filter to the lens barrel. The adhesive is applied between the lens barrel and the filter. However, since the adhesive is usually applied in a liquid state, the adhesive may flow along a surface of the filter or a surface of the lens barrel.

When the adhesive flows, the performance of the lens assembly may deteriorate because the adhesive is applied to a region not requiring the adhesive, so a structure that allows an appropriate amount of adhesive to be applied to the required region is needed.

The above information is presented as background information only to assist with an understanding of the present disclosure. No determination has been made, and no assertion is made, as to whether any of the above might be applicable as prior art with regard to the disclosure.

KR 2015 0058861 A relates to a camera module that has an adhesive material whose side is formed with a groove, an infrared filter combined with a lower part of a protrusion part, a lens barrel inserted into an upper side of an housing unit, and a printed circuit board for processing an output signal.

### SUMMARY

This Summary is provided to introduce a selection of concepts in a simplified form that are further described below in the Detailed Description.

According to claim 1, a lens assembly includes a lens barrel, a lens disposed on the lens barrel, and a filter configured to filter light passing through the lens, wherein the lens barrel includes a seating portion in which the filter is disposed; and a step portion disposed facing the filter between the seating portion and an optical axis, and an avoidance groove formed to be concave in an optical axis direction is disposed on an upper surface of the seating portion.

The lens barrel may include an inclined portion connecting the seating portion and the step portion.

The inclined portion may form an obtuse angle with the seating portion.

The inclined portion may form an obtuse angle with the step portion.

The lens assembly may further include an adhesive applied between the seating portion and the filter, wherein a portion of the adhesive may be disposed in the avoidance groove.

The avoidance groove may include a first inclined surface, and a second inclined surface extending from the first inclined surface.

A virtual line obtained by extending the first inclined surface and a lower surface of the filter may form an acute angle, and a virtual line obtained by extending the second inclined surface and the lower surface of the filter may form an acute angle.

The lens barrel may include an adhesive inlet configured to introduce an adhesive between the filter and the seating portion, and the adhesive inlet may be disposed outside the filter with respect to the optical axis.

The adhesive inlet may be disposed in plural, and the plurality of adhesive inlets may be disposed to be rotationally symmetrical with respect to the optical axis.

According to claim 10, a lens assembly includes a lens barrel, a lens disposed on the lens barrel, and a filter configured to filter light passing through the lens, wherein the lens barrel includes a plurality of seating portions in which the filter is disposed, and a step portion disposed between the plurality of seating portions and an optical axis, wherein the plurality of seating portions are disposed to be spaced apart from each other in a circumferential direction of the lens barrel, and a separation space formed between the plurality of seating portions communicates with the outside of the lens barrel.

The lens barrel may include an air passage, and the air passage may communicate with the separation space.

The air passage may be disposed in plural, the separation space may be disposed in plural, and each of the plurality of air passages may be connected to each of the separation spaces, respectively, formed between the plurality of seating portions.

The lens barrel may include an inclined portion connecting the seating portion and the step portion.

The inclined portion may form an obtuse angle with the seating portion.

A groove formed to be concave in an optical axis direction may be disposed in each of the plurality of seating portions.

The lens assembly may further include an adhesive applied between the plurality of seating portions and the filter, and at least a portion of the adhesive may be disposed in the groove.

The groove may include a first inclined surface, and a second inclined surface extending from the first inclined surface.

The first inclined surface and the second inclined surface may form an obtuse angle.

Other features and aspects will be apparent from the following detailed description, the drawings, and the claims.

### BRIEF DESCRIPTION OF DRAWINGS

FIG. 1 is a perspective view of a lens assembly according to an embodiment of the present disclosure.
FIG. 2 is a cross-sectional view of a lens assembly according to an embodiment of the present disclosure.
FIG. 3 is a view illustrating a portion of a rear portion of a lens assembly according to a first embodiment of the present disclosure.
FIG. 4 is a diagram illustrating a cross-section taken along line I-I' of FIG. 3.
FIG. 5 is an enlarged view of a portion of FIG. 4.
FIG. 6 is an enlarged view of a portion of FIG. 5.
FIG. 7 is a view of a rear portion of a lens assembly according to a second embodiment of the present disclosure.
FIG. 8 is a diagram showing a cross-section taken along line II-II' of FIG. 7.
FIG. 9 is a diagram showing a cross-section taken along line III-III' of FIG. 7.
FIG. 10 is a view of a rear portion of a lens assembly according to a third embodiment of the present disclosure.
FIG. 11 is a diagram illustrating a cross-section taken along line IV-IV' of FIG. 10.
FIG. 12 is a diagram illustrating a cross-section taken along line V-V' of FIG. 10.

Throughout the drawings and the detailed description, unless otherwise described, the same reference numerals refer to the same elements. The drawings may not be to scale, and the relative size, proportions, and depiction of elements in the drawings may be exaggerated for clarity, illustration, and convenience.

### DETAILED DESCRIPTION

Hereinafter, while examples of the present disclosure will be described in detail with reference to the accompanying drawings, it is noted that examples are not limited to the same.

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of this disclosure. For example, the sequences of operations described herein are merely examples, and are not limited to those set forth herein, but may be changed as will be apparent after an understanding of this disclosure, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of this disclosure.

Throughout the specification, when an element, such as a layer, region, or substrate is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

As used herein, the term "and/or" includes any one and any combination of any two or more of the associated listed items; likewise, "at least one of" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Spatially relative terms, such as "above," "upper," "below," "lower," and the like, may be used herein for ease of description to describe one element's relationship to another element as shown in the figures. Such spatially relative terms are intended to encompass different orientations of the device in use or operation in addition to the orientation depicted in the figures. For example, if the device in the figures is turned over, an element described as being "above," or "upper" relative to another element would then be "below," or "lower" relative to the other element. Thus, the term "above" encompasses both the above and below orientations depending on the spatial orientation of the device. The device may also be oriented in other ways (rotated 90 degrees or at other orientations), and the spatially relative terms used herein are to be interpreted accordingly.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Due to manufacturing techniques and/or tolerances, variations of the shapes shown in the drawings may occur. Thus, the examples described herein are not limited to the specific shapes shown in the drawings, but include changes in shape that occur during manufacturing.

Herein, it is noted that use of the term "may" with respect to an example, for example, as to what an example may include or implement, means that at least one example exists in which such a feature is included or implemented while all examples are not limited thereto.

For explanation purposes, an object side may be referred to as a front and an image side may be referred to as a rear. In addition, a direction away from an optical axis in a direction perpendicular to the optical axis may be referred to as the outside, and a direction toward an optical axis in the direction perpendicular to the optical axis may be referred to as the inside.

The features of the examples described herein may be combined in various ways as will be apparent after an understanding of this disclosure. Further, although the examples described herein have a variety of configurations, other configurations are possible as will be apparent after an understanding of this disclosure.

An aspect of the present disclosure includes, but is not limited to, a lens assembly improving bonding reliability between the lens barrel and the filter, and preventing the performance of the lens assembly from being deteriorated by the adhesive.

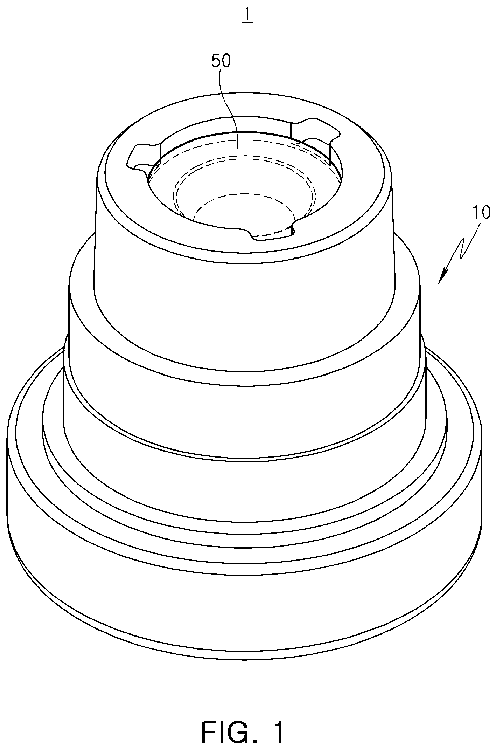

A lens assembly according to a first embodiment will be described with reference to FIGS. 1 to 6.

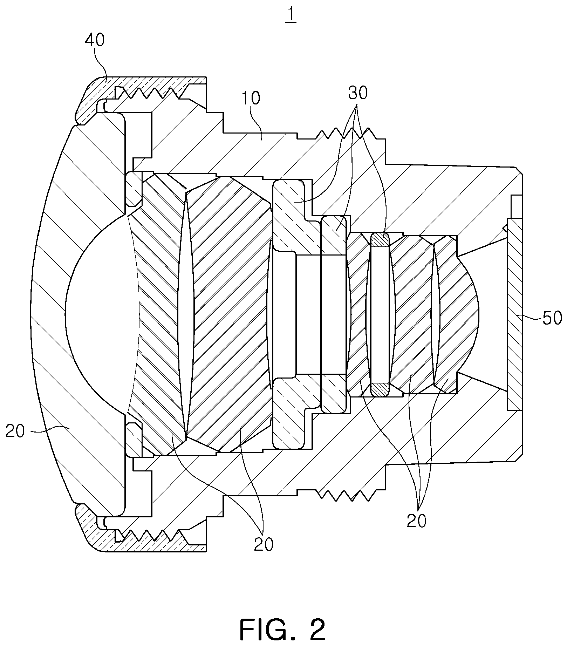

FIG. 1 is a perspective view of a lens assembly according to an embodiment of the present disclosure, and FIG. 2 is a cross-sectional view of a lens assembly according to an embodiment of the present disclosure.

The lens assembly 1 according to the first embodiment may include a lens 20, a lens barrel 10, and a filter 50.

The lenses 20 may be disposed in plural. A portion of the plurality of lenses 20 may be disposed inside the lens barrel 10. Specifically, a portion of the plurality of lenses 20 may be disposed in holes penetrating the lens barrel 10 in an optical axis direction. At least a portion of a lens among the plurality of lenses 20, disposed at the frontmost side of an object side may be exposed to the outside of the lens barrel 10.

The plurality of lenses 20 may be disposed in the optical axis direction. A spacer 30 may be disposed between the plurality of lenses 20. The spacer 30 may be a member for maintaining a gap between the plurality of lenses 20.

A radius of the lens barrel 10 may vary in the optical axis direction. The radius of the lens barrel 10 may become narrower from an object side to an image side. Conversely, the radius of the lens barrel 10 may become wider from the object side to the image side.

A cap 40 may be disposed in front of the lens barrel 10. The cap 40 may be bonded to the lens barrel 10 to form a portion of the lens assembly. The cap 40 may fix the lens among the plurality of lenses, disposed at the frontmost side of the object side to the lens barrel 10.

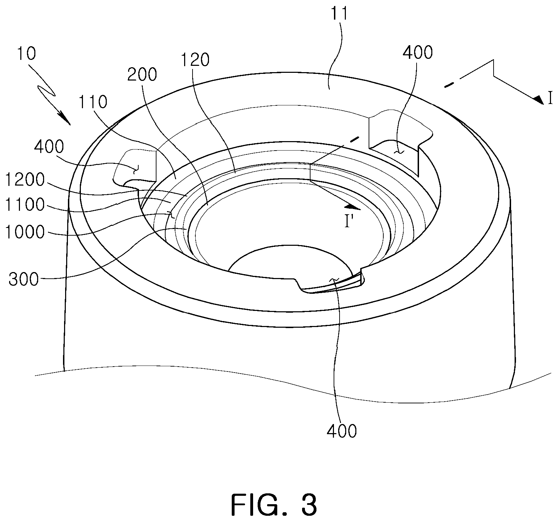

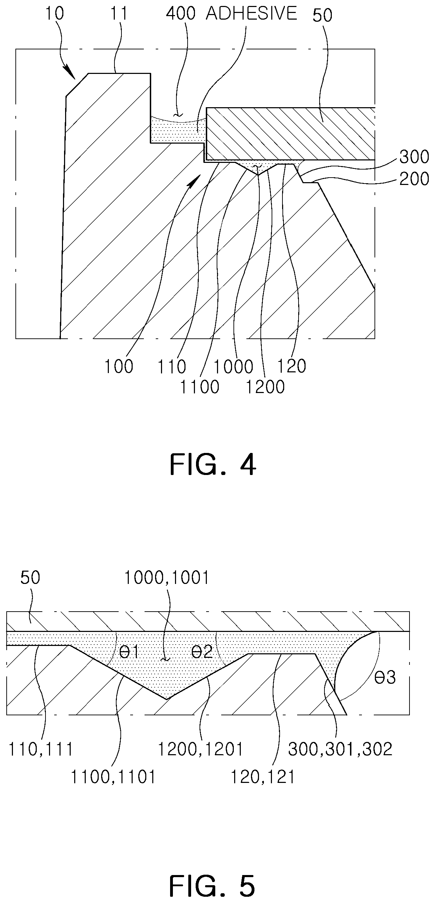

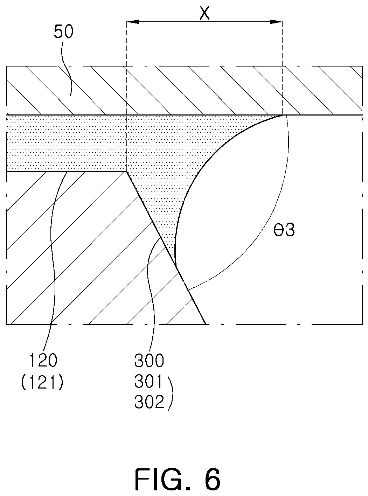

FIG. 3 is a view illustrating a portion of a rear portion of a lens assembly according to a first embodiment of the present disclosure, FIG. 4 is a diagram illustrating a cross-section taken along line I-I' of FIG. 3, FIG. 5 is an enlarged view of a portion of FIG. 4, and FIG. 6 is an enlarged view of a portion of FIG. 5.

A filter 50 may be disposed at the rear of the lens barrel 10. The filter 50 can filter light passing through the lens. The filter 50 may be an IR filter (Infrared Cut Filter).

A space in which the filter 50 is disposed may be provided at the rear of the lens barrel 10. The space in which the filter 50 is disposed may be a space formed to be concave from the rear of the lens barrel 10 to the front of the lens barrel 10.

A seating portion 100 in which the filter 50 is disposed may be disposed at the rear of the lens barrel 10. One surface of the filter 50 may face the seating portion 100. The one surface of the filter 50 facing the seating portion 100 may be a surface toward an object side.

The seating portion 100 may be disposed closer to the object side than a rear end 11 of the lens barrel 10. The seating portion 100 may be formed by being recessed from the rear of the lens barrel 10 to the front of the lens barrel 10. The seating portion 100 may form a step with the rear end 11 of the lens barrel 10.

The seating portion 100 may be formed along a circumference of a hole formed in the lens barrel 10. The seating portion 100 may be disposed further outside the hole formed in the lens barrel 10. A step portion 200 and an inclined portion 300, which will be described later, may be disposed between the seating portion 100 and the optical axis.

The seating portion 100 may include a first upper surface 110, a second upper surface 120, and an avoidance groove 1000. An adhesive may be applied to the seating portion 100. The filter 50 may be coupled to the seating portion 100 through an adhesive.

An adhesive inlet 400 may be disposed outside the seating portion 100. When a distance measured from the object side to the image side is defined as a height, a lower surface of the adhesive inlet 400 may be disposed on a higher position than an upper surface of the seating portion. An adhesive may be injected through the adhesive inlet 400, and the injected adhesive may be applied to the seating portion 100. The adhesive inlets 400 may be disposed in plural. The plurality of adhesive inlets 400 may be disposed to be spaced apart from each other along a circumferential direction of the seating portion 100.

The avoidance groove 1000 may be formed by being recessed from the upper surface of the seating portion 100 in the optical axis direction. The avoidance groove 1000 may be disposed between the first upper surface 110 and the second upper surface 120 of the seating portion 100. The seating portion 100 may be formed along an inner peripheral surface of the lens barrel 10. When viewed from the rear of the lens barrel 10, the avoidance groove 1000 may have a ring shape.

Based on the avoidance groove 1000, the first upper surface 110 may be a surface disposed on the outside in a direction perpendicular to the optical axis, and the second upper surface 120 may be a surface disposed on the inside in a direction perpendicular to the optical axis.

Based on the cross-section parallel to the optical axis, the avoidance groove 1000 may include a first inclined surface 1100 and a second inclined surface 1200. The first inclined surface 1100 and the second inclined surface 1200 may be connected to each other. The first inclined surface 1100 may be disposed at an obtuse angle with the first upper surface 110 of the seating portion 100, and the second inclined surface 1200 may be disposed at an obtuse angle with the second upper surface 120 of the seating portion 100. The first inclined surface 1100 and the second inclined surface 1200 may be disposed at an obtuse angle.

Therefore, when a filter 50 is disposed on the seating portion 100, the filter 50 and the first inclined surface 1100 may form a first acute angle θ1, and the filter 50 and the second inclined surface 1200 may form a second acute angle θ2.

A position of the first upper surface 110 may be higher than a position of the second upper surface 120. That is, when the filter 50 is disposed on the seating portion 100, a distance from the first upper surface 110 to the filter 50 may be shorter than a distance from the second upper surface 120 to the filter 50.

The step portion 200 may be disposed inside the lens barrel 10. The step portion 200 may be formed to protrude from an inner surface of the lens barrel 10 in a direction perpendicular to the optical axis. When the distance measured from the object side to the image side is defined as a height, an upper surface of the seating portion 100 may be disposed on a higher position than an upper surface of the step portion 200. The height of the seating portion 100 based on the upper surface of the step portion 200 may be a positive value.

An inclined portion 300 may be disposed between the step portion 200 and the seating portion 100. The inclined portion 300 may be a surface connecting the step portion 200 and the seating portion 100. In addition, the inclined portion 300 may be a surface obtained by extending a surface from the second upper surface 120. That is, the inclined portion 300 may be a surface obtained by connecting the second upper surface 120 and the step portion 200. The inclined portion 300 may be a boundary distinguishing the step portion 200 and the seating portion 100. The step portion 200 and the inclined portion 300 may form an obtuse angle. The seating portion 100 and the inclined portion 300 may form an obtuse angle. The second upper surface 120 and the inclined portion 300 of the seating portion 100 may form an obtuse angle. When the filter 50 is disposed on the seating portion 100, the filter 50 and the inclined portion 300 may form an acute angle. The inclined portion 300 and the filter 50 may form a third acute angle θ3. The third acute angle θ3 may be a larger acute angle than the first acute angle θ1 and the second acute angle θ2.

The filter 50 may be disposed on the seating portion 100, and an adhesive may be injected through an adhesive inlet 400. When the adhesive is injected into the adhesive inlet 400, the adhesive may flow between the seating portion 100 and the filter 50 and be applied to the upper surface of the seating portion 100. Specifically, when a fixed amount of adhesive is injected into the adhesive inlet 400, the adhesive may flow due to gravity. The adhesive may flow into the lens barrel 10 between the filter 50 and the seating portion 100.

When the adhesive passes between the filter 50 and the first upper surface 110 of the seating portion 100 and reaches the avoidance groove 1000, an area of a flow path through which the adhesive flows expands, so a flow rate of the adhesive decreases, and a static pressure of the adhesive increases. In this case, when the first acute angle θ1 is wide, the flow of the adhesive stops at the avoidance groove 1000, and the adhesive may form an interface between the first inclined surface 1100 and the filter 50. Here, the interface may refer to a boundary between the adhesive and air. The first acute angle θ1 may be determined as an angle at which the adhesive does not form an interface between the first inclined surface 1100 and the filter 50. Since the interface formed between the first slope 1100 and the filter 50 by the adhesive may vary depending on an amount of adhesive and viscosity of the adhesive, a size of the first acute angle θ1 may be determined depending on the amount of adhesive and the viscosity of the adhesive.

If the adhesive does not form an interface between the first inclined surface 1100 and the filter 50, the avoidance groove 1000 may be filled with a portion of the adhesive, and the adhesive may continue to flow between the filter 50 and the second upper surface 120. The adhesive flowing between the filter 50 and the second upper surface 120 may form an interface between the inclined portion 300 and the filter 50, and the flow of adhesive can be stopped.

When the adhesive passes between the filter 50 and the seating portion 100 and reaches the inclined portion 300, the area of the flow path through which the adhesive flows expands, so the flow rate of the adhesive decreases and the static pressure of the adhesive increases. In this case, the adhesive forms an interface between the filter 50 and the inclined portion 300, and the flow of the adhesive stops.

When the longest distance to the interface measured in a direction perpendicular to the optical axis is defined as an interfacial distance (x), based on a position in which the seating portion 100 and the inclined portion 300 are in contact, the interfacial distance (x) can become shorter as the acute angle increases. Conversely, the interfacial distance (x) can become longer as the acute angle becomes smaller.

In addition, the interfacial distance (x) may vary depending on the viscosity of the adhesive. The higher the viscosity of the adhesive, the shorter the interfacial distance (x) can be. Conversely, the lower the viscosity of the adhesive, the longer the interfacial distance (x) can be.

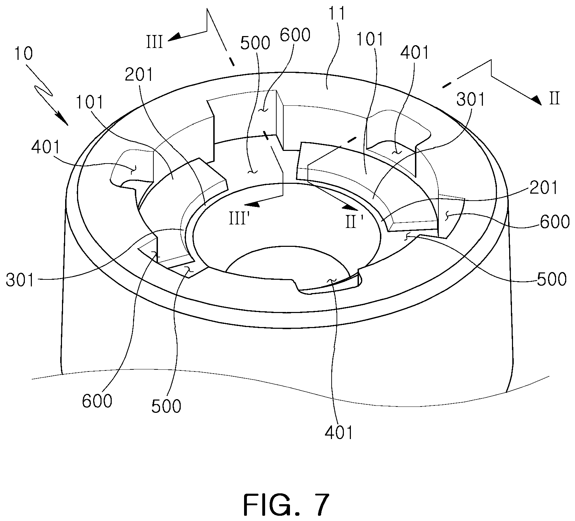

A lens assembly according to a second embodiment will be described with reference to FIGS. 7 to 9.

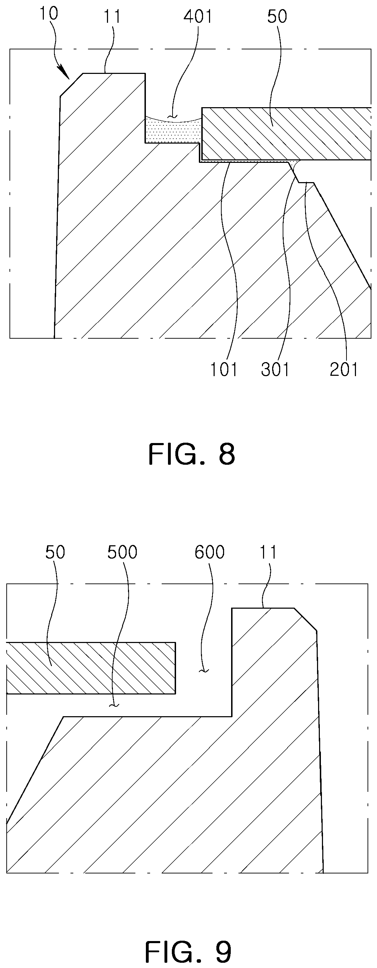

FIG. 7 is a view illustrating a portion of a rear portion of the lens assembly according to the second embodiment of the present disclosure, FIG. 8 is a view illustrating a cross-section taken along line II-II' of FIG. 7, and FIG. 9 is a view illustrating a cross-section taken along line III-III' of FIG. 7.

In the following description, repetitive description of the same content as the first embodiment may be omitted.

A seating portion 101 may be formed along a circumferential surface of a hole penetrating the lens barrel 10 in an optical axis direction. The seating portion 101 may be disposed further outside the hole formed in the lens barrel 10.

The seating portion 101 may be disposed in plural. The plurality of seating portions 101 may be disposed to be spaced apart from each other in a circumferential direction of the lens barrel 10. Each of the plurality of seating portions 101 may be rotationally symmetrical with respect to an optical axis. A step portion 201 and an inclined portion 301 may be disposed between the seating portion 101 and the optical axis.

The inclined portion 301 may be a boundary between the step portion 201 and the seating portion 101. The inclined portion 301 may be disposed between the seating portion 101 and the step portion 201. The inclined portion 301 may be disposed in plural. Each of the plurality of inclined portions 301 may be disposed to correspond to each of the plurality of seating portions 101.

A separation space 500 may be disposed between the plurality of seating portions 101. The separation space 500 may communicate with an air passage 600, which will be described later.

An adhesive inlet 400 may be disposed outside the seating portion 101. The adhesive inlets 401 may be disposed in plural. The adhesive inlet 401 may be disposed for each of the plurality of seating portions 101. The plurality of inlets 401 may be disposed to be rotationally symmetrical with respect to the optical axis. The plurality of adhesive inlets 400 may be disposed to be spaced apart from each other in the circumferential direction of the lens barrel 10.

A plurality of air passages 600 may be disposed. The plurality of air passages 600 may be disposed to be spaced apart from each other in the circumferential direction of the lens barrel 10. Each of the plurality of air passages 600 may be rotationally symmetrical with respect to the optical axis. The air passage 600 may be disposed outside the separation space 500. The air passage 600 may communicate with the separation space 500.

When a filter 50 is disposed on the seating portion 101, air may flow into the lens barrel 10 through the air passage 600 and the separation space 500. Conversely, air may be discharged externally of the lens barrel 10 through the separation space 500 and the air passage 600. Therefore, when the filter 50 is disposed on the seating portion 101 and an adhesive is injected into the adhesive inlet 400, air may flow to the inside and outside of the lens barrel 10, so the adhesive may smoothly flow.

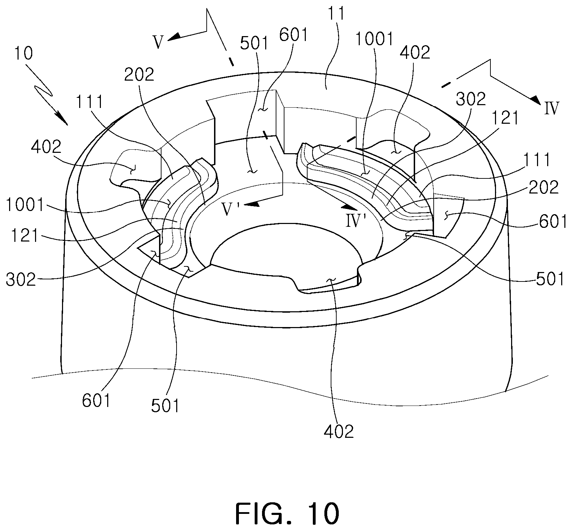

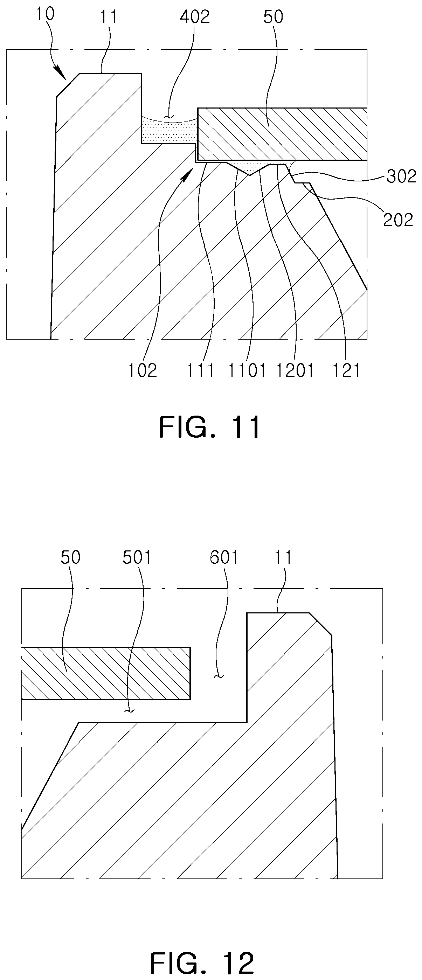

A lens assembly according to a third embodiment will be described with reference to FIGS. 10 to 12. FIG. 10 is a view illustrating a portion of a rear portion of the lens assembly according to a third embodiment of the present disclosure, FIG. 11 is a view illustrating a cross-section taken along line IV-IV' of FIG. 10, and FIG. 12 is a view illustrating a cross-section taken along line V-V' of FIG. 10.

In the following description, repetitive descriptions of the same content as the first and second embodiments may be omitted.

A seating portion 102 may be disposed in plural. The plurality of seating portions 102 may be disposed to be rotationally symmetrical with respect to an optical axis. The plurality of seating portions 102 may be disposed to be spaced apart from each other in a circumferential direction of the lens barrel 10. A step portion 202 and an inclined portion 302 may be disposed between the plurality of seating portions 102 and the optical axis.

The inclined portion 302 may be a boundary that distinguishes the step portion 202 and the seating portion 102. The inclined portions 302 may be disposed in plural. Each of the plurality of inclined portions 302 may be disposed to correspond to each of the plurality of seating portions 102.

A separation space 501 may be disposed between the plurality of seating portions 102. The separation space 501 may communicate with an air passage 601. An adhesive inlet 402 may be disposed outside the plurality of seating portions 102. The adhesive inlet 402 may be disposed in plural. The adhesive inlet 402 may be disposed to correspond to each of the plurality of seating portions 102.

Each of the plurality of seating portions 102 may include a first upper surface 111, a second upper surface 121, and an avoidance groove 1001.

The avoidance groove 1001 may be formed to be concave from an upper surface of the seating portion 102 in an optical axis direction.

The avoidance groove 1001 may be disposed between the first upper surface 111 and the second upper surface 121 of the seating portion 102. Based on the avoidance groove 1001, the first upper surface 111 may be a surface disposed on the outside in a direction perpendicular to the optical axis, and the second upper surface 121 may be a surface disposed on the inside in a direction perpendicular to the optical axis.

Based on a cross-section parallel to the optical axis, the avoidance groove 1001 may include a first inclined surface 1101 and a second inclined surface 1201. The first inclined surface 1101 and the second inclined surface 1201 may be connected to each other. The first inclined surface 1101 may be disposed at an obtuse angle with the first upper surface 111 of the seating portion 102, and the second inclined surface 1201 may be disposed at an obtuse angle with the second upper surface 121 of the seating portion 102, and the first inclined surface 1101 and the second inclined surface 1201 may be disposed at an obtuse angle.

When viewed from the rear of the lens barrel 10, the avoidance groove 1001 may be disposed between the adhesive inlet 402 and the inclined portion 302. In addition, when viewed from the rear of the lens barrel 10, one end and the other end of the avoidance groove 1001 may be formed to extend to an inner surface of the lens barrel 10, respectively. In addition, the avoidance groove 1002 may be formed along the inclined portion 302 and may be disposed to be spaced apart from the inclined portion 302.

As set forth above, according to the present disclosure, it is possible to prevent defects of a lens assembly caused by an adhesive applied between the lens barrel and the filter.

## Claims

1. A lens assembly (1), comprising:
a lens barrel (10);
a lens (20) disposed on the lens barrel (10); and
a filter (50) configured to filter light passing through the lens (20),
wherein the lens barrel (10) comprises a seating portion (100) in which the filter (50) is disposed; and
a step portion (200) disposed facing the filter (50) between the seating portion (100) and an optical axis
wherein an avoidance groove (1000) formed to be concave in an optical axis direction is disposed on an upper surface (110,120) of the seating portion (100).

2. The lens assembly of claim 1, wherein the lens barrel comprises an inclined portion connecting the seating portion and the step portion.

3. The lens assembly of claim 2, wherein the inclined portion forms an obtuse angle with the seating portion.

4. The lens assembly of claim 3, wherein the inclined portion forms an obtuse angle with the step portion.

5. The lens assembly of claim 1, further comprising an adhesive applied between the seating portion and the filter,
wherein a portion of the adhesive is disposed in the avoidance groove.

6. The lens assembly of claim 1, wherein the avoidance groove comprises:
a first inclined surface; and
a second inclined surface extending from the first inclined surface.

7. The lens assembly of claim 6, wherein a virtual line obtained by extending the first inclined surface and a lower surface of the filter forms an acute angle, and
wherein a virtual line obtained by extending the second inclined surface and the lower surface of the filter forms an acute angle.

8. The lens assembly of claim 1, wherein the lens barrel comprises an adhesive inlet configured to introduce an adhesive between the filter and the seating portion, and
wherein the adhesive inlet is disposed outside the filter with respect to the optical axis.

9. The lens assembly of claim 8, wherein the adhesive inlet is disposed in plural, and
the plurality of adhesive inlets are disposed to be rotationally symmetrical with respect to the optical axis.

10. A lens assembly (1), comprising:
a lens barrel (10);
a lens (20) disposed on the lens barrel (10); and
a filter (50) configured to filter light passing through the lens (20),
wherein the lens barrel (10) comprises a plurality of seating portions (101) in which the filter (50) is disposed; and
a step portion (201) disposed between the plurality of seating portions (101) and an optical axis
wherein the plurality of seating portions (101) are disposed to be spaced apart from each other in a circumferential direction of the lens barrel (10), and
a separation space (500) formed between the plurality of seating portions (101) communicates with the outside of the lens barrel (10).

11. The lens assembly of claim 10, wherein the lens barrel comprises an air passage, and
wherein the air passage communicates with the separation space.

12. The lens assembly of claim 11, wherein the air passage is disposed in plural,
wherein the separation space is disposed in plural, and
wherein each of the plurality of air passages is connected to each of the separation spaces, respectively, formed between the plurality of seating portions.

13. The lens assembly of claim 10, wherein the lens barrel comprises an inclined portion connecting the seating portion and the step portion.

14. The lens assembly of claim 13, wherein the inclined portion forms an obtuse angle with the seating portion.

15. The lens assembly of claim 10, wherein a groove formed to be concave in an optical axis direction is disposed in each of the plurality of seating portions.

## Patentansprüche

1. Objektivanordnung (1), umfassend:
einen Objektivtubus (10);
ein auf dem Objektivtubus (10) angeordnetes Objektiv (20); und
ein Filter (50), ausgebildet zum Filtern von durch das Objekt (20) fallendem Licht,
wobei der Objektivtubus (10) einen Sitzabschnitt (100) umfasst, in dem das Filter (50) angeordnet ist; und
einen Stufenabschnitt (200), angeordnet dem Filter (50) zugewandt zwischen dem Sitzabschnitt (100) und einer optischen Achse,
wobei eine Ausweichnut (1000), so gebildet, dass sie in einer optischen Achsrichtung konkav ist, auf einer oberen Fläche (110, 120) des Sitzabschnitts (100) angeordnet ist.

2. Objektivanordnung nach Anspruch 1, wobei der Objektivtubus einen schrägen Abschnitt umfasst, der den Sitzabschnitt und den Stufenabschnitt verbindet.

3. Objektivanordnung nach Anspruch 2, wobei der schräge Abschnitt einen stumpfen Winkel mit dem Sitzabschnitt bildet.

4. Objektivanordnung nach Anspruch 3, wobei der schräge Abschnitt einen stumpfen Winkel mit dem Stufenabschnitt bildet.

5. Objektivanordnung nach Anspruch 1, ferner umfassend einen zwischen dem Sitzabschnitt und dem Filter angebrachten Klebstoff,
wobei ein Abschnitt des Klebstoffs in der Ausweichnut angeordnet ist.

6. Objektivanordnung nach Anspruch 1, wobei die Ausweichnut umfasst:
eine erste schräge Fläche; und
eine zweite schräge Fläche, die sich von der ersten schrägen Fläche aus erstreckt.

7. Objektivanordnung nach Anspruch 6, wobei eine virtuelle Linie, die durch Verlängern der ersten schrägen Fläche und einer unteren Fläche des Filters erhalten wird, einen spitzen Winkel bildet, und
wobei eine virtuelle Linie, die durch Verlängern der zweiten schrägen Fläche und der unteren Fläche des Filters erhalten wird, einen spitzen Winkel bildet.

8. Objektivanordnung nach Anspruch 1, wobei der Objektivtubus einen Klebstoffeinlass umfasst, der zum Einführen eines Klebstoffs zwischen dem Filter und dem Sitzabschnitt ausgebildet ist, und
wobei der Klebstoffeinlass in Bezug auf die optische Achse außerhalb des Filters angeordnet ist.

9. Objektivanordnung nach Anspruch 8, wobei der Klebstoffeinlass in einer Vielzahl angeordnet ist und die Vielzahl von Klebstoffeinlässen so angeordnet ist, dass sie in Bezug auf die optische Achse rotationssymmetrisch ist.

10. Objektivanordnung (1), umfassend:
einen Objektivtubus (10);
ein auf dem Objektivtubus (10) angeordnetes Objektiv (20); und
ein Filter (50), ausgebildet zum Filtern von durch das Objekt (20) fallendem Licht,
wobei der Objektivtubus (10) eine Vielzahl von Sitzabschnitten (101) umfasst, in denen das Filter (50) angeordnet ist; und
einen Stufenabschnitt (201), angeordnet zwischen der Vielzahl von Sitzabschnitten (101) und einer optischen Achse,
wobei die Vielzahl von Sitzabschnitten (101) so angeordnet ist, dass sie in einer Umfangsrichtung des Objektivtubus (10) voneinander beabstandet ist, und
ein Trennraum (500), gebildet zwischen der Vielzahl von Sitzabschnitten (101), mit der Außenseite des Objektivtubus (10) in Verbindung steht.

11. Objektivanordnung nach Anspruch 10, wobei der Objektivtubus einen Luftdurchlass umfasst, und
wobei der Luftdurchlass mit dem Trennraum in Verbindung steht.

12. Objektivanordnung nach Anspruch 11, wobei der Luftdurchlass in einer Vielzahl angeordnet ist, wobei der Trennraum in einer Vielzahl angeordnet ist, und
wobei jeder der Vielzahl von Luftdurchlässen mit jedem der Trennräume verbunden ist, die jeweils zwischen der Vielzahl von Sitzabschnitten gebildet sind.

13. Objektivanordnung nach Anspruch 10, wobei der Objektivtubus einen schrägen Abschnitt umfasst, der den Sitzabschnitt und den Stufenabschnitt verbindet.

14. Objektivanordnung nach Anspruch 13, wobei der schräge Abschnitt einen stumpfen Winkel mit dem Sitzabschnitt bildet.

15. Objektivanordnung nach Anspruch 10, wobei in jeder der Vielzahl von Sitzabschnitten eine Nut angeordnet ist, die in optischer Achsrichtung konkav gebildet ist.

## Revendications

1. Ensemble de lentilles (1), comprenant :
un barillet de lentille (10) ;
une lentille (20) disposée sur le barillet de lentille (10) ; et
un filtre (50) configuré pour filtrer une lumière traversant la lentille (20),
dans lequel le barillet de lentille (10) comprend une partie d'assise (100) dans laquelle le filtre (50) est disposé ; et
une partie étagée (200) disposée orientée vers le filtre (50) entre la partie d'assise (100) et un axe optique
dans lequel une rainure d'évitement (1000) constituée pour être concave dans une direction d'axe optique est disposée sur une surface supérieure (100, 120) de la partie d'assise (100).

2. L'assemblage de lentille de la revendication 1, dans lequel le barillet de lentille comprend une partie inclinée connectant la partie d'assise et la partie étagée.

3. L'assemblage de lentille de la revendication 2, dans lequel la partie inclinée forme un angle obtus avec la partie d'assise.

4. L'assemblage de lentille de la revendication 3, dans lequel la partie inclinée forme un angle obtus avec la partie étagée.

5. L'assemblage de lentille de la revendication 1, comprenant en outre un adhésif appliqué entre la partie d'assise et le filtre,
dans lequel une partie de l'adhésif est disposée dans la rainure d'évitement.

6. L'assemblage de lentille de la revendication 1, dans lequel la rainure d'évitement comprend :
une première surface inclinée ; et
une deuxième surface inclinée s'étendant depuis la première surface inclinée.

7. L'assemblage de lentille de la revendication 6, dans lequel une ligne virtuelle obtenue en étendant la première surface inclinée et une surface inférieure du filtre forme un angle aigu, et
dans lequel une ligne virtuelle obtenue en étendant la deuxième surface inclinée et la surface inférieure du filtre forme un angle aigu.

8. L'assemblage de lentille de la revendication 1, dans lequel le barillet de lentille comprend une entrée d'adhésif configurée pour introduire un adhésif entre le filtre et la partie d'assise, et
dans lequel l'entrée d'adhésif est disposée à l'extérieur du filtre par rapport à l'axe optique.

9. L'assemblage de lentille de la revendication 8, dans lequel l'entrée d'adhésif est disposée au pluriel, et la pluralité d'entrées d'adhésif sont disposées pour être symétriques en rotation par rapport à l'axe optique.

10. Assemblage de lentille (1), comprenant :
un barillet de lentille (10) ;
une lentille (20) disposée sur le barillet de lentille (10) ; et
un filtre (50) configuré pour filtrer une lumière traversant la lentille (20),
dans lequel le barillet de lentille (10) comprend une pluralité de parties d'assise (101) dans lesquelles le filtre (50) est disposé ; et
une partie étagée (201) disposée entre la pluralité de parties d'assise (101) et un axe optique dans lequel la pluralité de parties d'assise (101) sont disposées de sorte à être éloignées par espacement l'une de l'autre dans une direction de circonférence du barillet de lentille (10), et
un espace de séparation (500) formé entre la pluralité de parties d'assise (101) communique avec l'extérieur du barillet de lentille (10).

11. L'assemblage de lentille de la revendication 10, dans lequel le barillet de lentille comprend un passage d'air, et
dans lequel le passage d'air communique avec l'espace de séparation.

12. L'assemblage de lentille de la revendication 11, dans lequel le passage d'air est disposé au pluriel,
dans lequel l'espace de séparation est disposé au pluriel, et
dans lequel chacun de la pluralité de passages d'air est connecté à chacun des espaces de séparation, respectivement, formés entre la pluralité de parties d'assise.

13. L'assemblage de lentille de la revendication 10, dans lequel le barillet de lentille comprend une partie inclinée connectant la partie d'assise et la partie étagée.

14. L'assemblage de lentille de la revendication 13, dans lequel la partie inclinée forme un angle obtus avec la partie d'assise.

15. L'assemblage de lentille de la revendication 10, dans lequel une rainure formée pour être concave dans une direction d'axe optique est disposée dans chacune de la pluralité de parties d'assise.
